(19) Europäisches Patentamt
European Patent Office
Office européen des brevets

(11) **EP 3 679 617 B1**

(12) **EUROPÄISCHE PATENTSCHRIFT**

(45) Veröffentlichungstag und Bekanntmachung des Hinweises auf die Patenterteilung:
**16.12.2020  Patentblatt 2020/51**

(21) Anmeldenummer: **18736816.2**

(22) Anmeldetag: **20.06.2018**

(51) Int Cl.:
*H01M 8/04313* [(2016.01)]

(86) Internationale Anmeldenummer:
**PCT/EP2018/066354**

(87) Internationale Veröffentlichungsnummer:
**WO 2019/048100 (14.03.2019 Gazette 2019/11)**

(54) **VERFAHREN ZUM BESTIMMEN DER AUF EINEN BRENNSTOFFZELLENSTAPEL WIRKENDEN KOMPRESSIONSZUGKRAFT**

METHOD FOR DETERMINING THE COMPRESSIVE TENSILE FORCE ACTING ON A FUEL CELL STACK

PROCÉDÉ POUR DÉTERMINER UNE FORCE DE TRACTION COMPRESSION S'EXERÇANT SUR UN EMPILEMENT DE PILE À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2017   DE 102017215510**

(43) Veröffentlichungstag der Anmeldung:
**15.07.2020   Patentblatt 2020/29**

(73) Patentinhaber:
• **Audi AG**
  **85045 Ingolstadt (DE)**
• **Volkswagen AG**
  **38440 Wolfsburg (DE)**

(72) Erfinder:
• **STEWART, Ian**
  **Burnaby, British Columbia V5J 5J8 (CA)**
• **HARROWER, Thomas**
  **Burnaby, British Columbia V5J 5J8 (CA)**
• **KUSY, Matej**
  **Burnaby, British Columbia V5J 5J8 (CA)**

(56) Entgegenhaltungen:
**EP-A2- 1 870 952     DE-A1-102013 021 468**

**Beschreibung**

Die Erfindung betrifft ein Verfahren zum Bestimmen der auf einen Brennstoffzellenstapel wirkenden Kompressionszugkraft, insbesondere der aufgrund zumindest eines Spannelements auf den Brennstoffzellenstapel wirkenden Kompressionszugkraft. Darüber hinaus betrifft die Erfindung eine Datenverarbeitungseinrichtung, wie ein Smartphone, zum Bestimmen einer auf einen Brennstoffzellenstapel wirkenden Kompressionszugkraft sowie ein Computerprogramm zum Bestimmen einer auf einen Brennstoffzellenstapel wirkenden Kompressionszugkraft anhand akustischer Signale.

Brennstoffzellen nutzen die chemische Umsetzung eines Brennstoffs mit Sauerstoff zu Wasser zum Erzeugen elektrischer Energie. Hierfür weisen Brennstoffzellen als Kernkomponente eine Membran-Elektroden-Anordnung (MEA - *membrane electrode assembly*) mit einer Membran-Elektroden-Einheit auf. Letztere wird durch eine protonenleitende Membran, PEM, gebildet, an der beidseitig katalytische Elektroden angeordnet sind. Dabei trennt die Membran den der Anode zugeordneten Anodenraum und den der Kathode zugeordneten Kathodenraum voneinander und isoliert diese elektrisch. Auf den nicht der Membran zugewandten Seiten der Elektroden können zudem Gasdiffusionslagen angeordnet sein.

Im Betrieb der Brennstoffzelle wird ein wasserstoffhaltiger Brennstoff der Anode zugeführt, an der eine elektrochemische Oxidation von $H_2$ zu $H^+$ unter Abgabe von Elektronen erfolgt. Über die elektrolytische Membran erfolgt ein wassergebundener oder wasserfreier Transport der Protonen $H^+$ aus dem Anodenraum in den Kathodenraum. Die an der Anode bereitgestellten Elektronen werden über eine elektrische Leitung der Kathode zugeleitet. Der Kathode wird ein sauerstoffhaltiges Betriebsmedium zugeführt, sodass dort eine Reduktion von $O_2$ zu $O_2^-$ unter Aufnahme der Elektronen erfolgt. Diese Sauerstoffanionen reagieren im Kathodenraum mit den über die Membran transportierten Protonen unter Bildung von Wasser.

Ein Brennstoffzellenstapel ist in der Regel durch eine Vielzahl in einem Stapel (*stack*) in Stapelrichtung übereinander angeordneter MEA gebildet, deren elektrische Leistungen sich addieren. Zwischen den Membran-Elektroden-Anordnungen sind üblicherweise Bipolarplatten angeordnet, die eine Versorgung der einzelnen MEA mit den Reaktanten und einer Kühlflüssigkeit sicherstellen sowie als elektrisch leitfähiger Kontakt zu den Membran-Elektroden-Anordnungen fungieren.

Zwischen den Membran-Elektroden-Einheiten und den Bipolarplatten sind Dichtungen angeordnet, welche die Anoden- und Kathodenräume nach außen abdichten und ein Austreten der Betriebsmedien aus dem Brennstoffzellenstapel verhindern. Diese Dichtungen sind auf den Membran-Elektroden-Einheiten, den Bipolarplatten oder diesen beiden Komponenten vorgesehen. Zum dauerhaften Abdichten des Stapels und zum Gewährleisten des elektrischen Kontakts zwischen Bipolarplatten und Membran-Elektroden-Anordnungen wird der Brennstoffzellenstapel vor der Inbetriebnahme verpresst. Ferner werden Zugelemente eingesetzt, um den Brennstoffzellenstapel auch während des Betriebs zu verpressen. Somit soll beispielsweise der betriebsbedingten Höhenänderung der aktiven Bereiche von MEAs entgegengewirkt und ein sicherer Betrieb gewährleistet werden.

Aus dem Stand der Technik sind verschiedene Formen von Zugelementen bekannt. Beispielsweise können zwei an den Enden des Brennstoffzellenstapels angeordnete Endplatten mittels Zugelementen verbunden werden. Durch Einleiten von Zugkräften über die Zugelemente in die Endplatten wird der Brennstoffzellenstapel zusammengepresst. Als Zugelemente können Gewindestäbe, Zuganker, Ketten oder dergleichen eingesetzt werden. Ebenfalls bekannt ist die Verwendung von gespannten streifen- oder bandförmigen elastischen Spannelementen, die entweder mit den Endklappen verbunden sind oder den Stapel in zumindest einem Querschnitt (in Stapelrichtung) zumindest teilweise umlaufen.

Hinsichtlich von Ausgestaltung und Befestigungsmöglichkeiten derartiger elastischer Spannelemente wird beispielsweise auf die EP 1 870 952 A2 verwiesen, auf deren Inhalt hiermit vollumfänglich Bezug genommen wird. Abweichend von der Offenbarung der EP 1 870 952 A2 ist es im Rahmen der vorliegenden Anmeldung ausreichend, wenn ein elastisches Spannelement (Zugelement) jeweils an den Rand der Endplatten eines Brennstoffzellenstapels angreift.

Betriebsbedingt kann es im Betrieb des Brennstoffzellenstapels zu einer Änderung der Höhe der aktiven Bereiche der MEAs kommen. Ferner kann der Betriebsdruck der Betriebsmedien einer Kompression des Brennstoffzellenstapels entgegenwirken. Insbesondere bei elastischen Spannelementen, deren Elastizität mit der Zeit abnehmen kann, sollte daher regelmäßig eine Nachkontrolle der Stapelkompression erfolgen.

Aus dem Stand der Technik sind bereits Verfahren bekannt, um die Kompression eines Brennstoffzellenstapels quantitativ zu ermitteln.

Gemäß der US 2014/0255817 A1 wird ein Brennstoffzellenstapel mit einer vorbestimmten Kraft komprimiert und eine dazu korrespondierende Änderung der Stapelhöhe erfasst. Im laufenden Betrieb soll dann anhand einer gemessenen Stapelhöhe auf die aktuelle Kompression des Brennstoffzellenstapels geschlossen werden.

Gemäß der JP2010-157364 A wird ein Brennstoffzellenstapel zunächst durch Spannelemente mit integriertem Zugkraftmessgerät komprimiert und dabei die zu einer vorbestimmten Zugkraft korrespondierende Kompression ermittelt. Anschließend wird der Stapel mit gewöhnlichen Spannelementen ohne integriertes Zugkraftmessgerät bis zum Erreichen der vorab bestimmten Kompression verspannt, um die definierte Zugkraft einzustellen.

Gemäß der DE 103 92 581 B4 wird die mit einer vorbestimmten Druckbelastung verbundene Höhenänderung eines Brennstoffzellenstapels ermittelt. Zur statischen Kompression des Brennstoffzellenstapels werden dann dieser Höhenänderung entsprechende Distanzplatten zwischen eine fixierte Endplatte und den Brennstoffzellenstapel eingefügt.

Bei den vorgenannten Verfahren, wird stets eine Änderung der Stapelhöhe überwacht. Dies erfordert in der Regel den Ausbau des Brennstoffzellenstapels, beispielsweise aus einem Gehäuse. Zudem sind lokale Änderung der Kompression nicht oder nur schlecht erfassbar. Ebenfalls bekannt ist die Integration von Drucksensoren in einen Brennstoffzellenstapel selbst. Dies erfordert jedoch eine Anpassung innerer Grenzflächen des Brennstoffzellenstapels. Zudem ist bei einem Defekt der Sensoren der gesamte Brennstoffzellenstapel auszubauen und zu zerlegen.

Der Erfindung liegt nun die Aufgabe zugrunde, die Nachteile des Standes der Technik zu überwinden und ein Verfahren zum Bestimmen einer auf einen Brennstoffzellenstapel wirkenden Kompressionszugkraft bereitzustellen, welches im Betrieb des Brennstoffzellenstapels unkompliziert und kostengünstig durchgeführt werden kann.

Diese Aufgabe wird gelöst durch ein Verfahren zum Bestimmen der aufgrund zumindest eines Spannelements auf einen Brennstoffzellenstapel wirkenden Kompressionszugraft. Der Brennstoffzellenstapel weist dabei eine Vielzahl von in Stapelrichtung zwischen zwei Endplatten angeordneten Brennstoffzellen und zumindest ein in Stapelrichtung zwischen den Endplatten gespanntes Spannelement auf. Bei dem Spannelement handelt es sich bevorzugt um ein aus dem Stand der Technik bekanntes elastisches Spannelement, welches jeweils an den Endplatten des Brennstoffzellenstapels befestigt ist oder den Brennstoffzellenstapel in zumindest einem Querschnitt entlang der Stapelrichtung im Wesentlichen vollständig umläuft. Bezüglich der Ausgestaltung des zumindest einen Spannelements wird auch auf den Inhalt der EP 1 870 952 A2 verwiesen.

Das erfindungsgemäße Verfahren weist zumindest die Schritte auf:

(a) Anregen einer Schwingung eines schwingfähigen Abschnitts des zumindest einen Spannelements;
(b) Erfassen eines von dem schwingfähigen Abschnitt des zumindest einen Spannelements ausgehenden akustischen Signals;
(c) Ermitteln einer Grundfrequenz des erfassten akustischen Signals; und
(d) Ermitteln einer auf den schwingfähigen Abschnitt des zumindest einen Spannelements wirkenden Zugkraft anhand der ermittelten Grundfrequenz, der Länge des schwingfähigen Abschnitts und der linearen Massebelegung des zumindest einen Spannelements.

Es ist bekannt, dass eine aus ihrer Ruhelage ausgelenkte Saite in Form einer gedämpften longitudinalen und transversalen Schwingung in ihre Ruhelage zurückkehrt. Der vorliegenden Erfindung liegt die Erkenntnis zugrunde, dass für ein zum Komprimieren eines Brennstoffzellenstapels genutztes Spannelement im Wesentlichen die gleichen physikalisch akustischen Prinzipien gelten, wir für eine solche Saite.

Im erfindungsgemäßen Verfahren wird daher zunächst ein schwingfähiger Abschnitt des zumindest einen Spannelements zum Schwingen angeregt. Die Schwingung kann manuell oder mittels eines geeigneten Hilfsmittels, gegebenenfalls auch automatisiert, angeregt werden. Ein schwingfähiger Abschnitt bezeichnet dabei einen Abschnitt des Spannelements der nicht am Stapel fixiert ist und einen ausreichenden Abstand zum Stapel aufweist, wobei der Abstand einer maximalen transversalen Schwingungsamplitude des schwingenden schwingfähigen Abschnitts mindestens entspricht.

Ist das Spannelement jeweils an einer Seitenfläche einer ersten und zweiten Endplatte mittels Spannmitteln, beispielsweise Einhängehaken, fixiert, befindet sich der schwingfähige Abschnitt in der Regel zwischen den Spannmitteln. Alternativ ist das Spannelement jeweils an einer in Stapelrichtung nach außen weisenden Oberflächen einer ersten und zweiten Endplatte fixiert und läuft entlang dieser über eine Ecke und Seitenfläche der Endplatte hinweg zur gegenüberliegenden Endplatte. In diesem Fall erstreckt sich der schwingfähige Abschnitt des Spannelements in der Regel von einer in Stapelrichtung innenliegenden Kante der ersten Endplatte zur gegenüberliegenden innenliegenden Kante der zweiten Endplatte. Physikalisch stellen die Spannmittel beziehungsweise die innenliegenden Kanten feste Enden dar, die den schwingfähigen Abschnitt begrenzen.

Im erfindungsgemäßen Verfahren wird dann ein von dem schwingenden schwingfähigen Abschnitt ausgehendes akustisches Signal erfasst. Hierfür wird bevorzugt ein Schallwandler, wie ein Mikrofon, genutzt. Bevorzugt wird das akustische Signal nach einem Einschwingvorgang des schwingfähigen Abschnitts erfasst, das heißt in einem Zeitraum in dem ein im Wesentlichen zeitlich konstantes Signal vorliegt. Wie bei einer schwingenden Saite ist auch beim schwingenden schwingfähigen Abschnitt im Wesentlichen dessen transversale Schwingung für ein wahrnehmbares beziehungsweise messbares akustisches Signal verantwortlich.

Der Schallwandler beziehungsweise eine daran angeschlossene Auswerteelektronik ermöglicht bevorzugt eine Darstellung des gemessenen Schalldrucks beziehungsweise der gemessenen Schallintensität des akustischen Signals in Abhängigkeit von der Frequenz des erfassten Schallsignals. Hierfür wird bevorzugt eine Fourier-Transformation, beispielsweise FFT, oder eine Wavelet-Transformation genutzt. Gegenstand der Erfindung ist keine als bekannt vorausgesetzte Methode zum Ermitteln des Frequenzspektrums eines erfassten akustischen Signals. Auf eine Beschreibung solcher Methoden, wie sie auch von handelsüblichen Stimmgeräten für Instrumente angewendet werden, wird daher verzichtet.

In einem nächsten Schritt des erfindungsgemäßen Verfahrens wird eine Grundfrequenz des erfassten akustischen Signals ermittelt. Hierfür wird bevorzugt das aus dem erfassten akustischen Signal ermittelte Frequenzspektrum genutzt. Dieses wird bevorzugt als Überlagerung einer Vielzahl periodischer Schwingungen angenommen. Diese Annahme kann bereits der Bestimmung des Frequenzspektrum zugrunde liegen. Die Grundfrequenz ist somit der kleinste gemeinsame Teiler der im erfassten Signal enthaltenen Frequenzen beziehungsweise die niedrigste Frequenz im Frequenzlinienspektrum. In der Realität wird das erfasste akustische Signal neben einem harmonischen Frequenzgemisch auch aperiodische Anteile und Störungen enthalten und sich zudem zeitlich verändern. In der Regel wird daher ein kontinuierliches Signal im Frequenzspektrum erfasst. Als Grundfrequenz wird dann bevorzugt die Frequenz der niederfrequentesten Frequenzbande ermittelt, deren Amplitude einen vorbestimmten Schwellwert überschreitet. Methoden zur Frequenzanalyse akustischer Signale, insbesondere zum Ermitteln von Grundfrequenzen sind hinreichend bekannt.

Wie bei einer schwingenden Saite, ergeben sich auch für die Transversalschwingung des beidseitig fest eingespannten schwingfähigen Abschnitts des zumindest einen Spannelements die folgenden Eigenfrequenzen $f_n$:

$$f_n = \frac{n}{2L} \sqrt{\frac{F_{Zug}}{\mu}}$$

Dabei bezeichnet $n$ die Ordnung der harmonischen Frequenz (Grundfrequenz bei n=1), L die Länge des schwingfähigen Abschnitts des zumindest einen Spannelements, $F_{zug}$ die auf den schwingfähigen Abschnitt wirkende Zugkraft in [N] und $\mu$ die lineare Massebelegung in [kg/m] des schwingfähigen Abschnitts. Der Wert für $\mu$ ist in erster Näherung für das gesamte Spannelement konstant. Bevorzugt wird die lineare Massebelegung $\mu$ des zumindest einen Spannelements als Produkt der Dichte des zumindest einen Spannelements in [kg/m$^3$] und der Querschnittfläche des zumindest einen Spannelements in [m$^2$] bestimmt.

Anhand der obenstehenden Formel kann somit mit $n=1$ anhand der ermittelten Grundfrequenz des erfassten akustischen Signals und von Kenngrößen des Spannelements beziehungsweise dessen schwingfähigen Abschnitts die auf den schwingfähigen Abschnitt wirkende Zugkraft ermittelt werden. Somit kann mittels des erfindungsgemäßen Verfahrens auch die auf das zumindest eine Spannelement wirkende Zugkraft kumulativ ermittelt werden. Im Kräftegleichgewicht entspricht die auf das zumindest eine Spannelement wirkende Zugkraft der den Stapel komprimierenden Zugkraft. Somit kann mit dem erfindungsgemäßen Verfahren die Kompressionszugkraft für den Brennstoffzellenstapel bestimmt werden.

Das erfindungsgemäße Verfahren ermöglicht somit eine einfache Methode zur *in situ* Messung der Spannung der Spannelemente sowie der auf den gesamten Stapel wirkenden Kompressionszugkraft. Die Methode ist dabei in nur wenigen Minuten durchführbar und somit außerordentlich schnell. Zudem sind Programme zur Aufnahme eines akustischen Frequenzspektrums sowie zum Bestimmen einer Grundfrequenz bereits als kostengünstige Applikationen für Smartphones erhältlich. Das erfindungsgemäße Verfahren ist somit ebenfalls außerordentlich preiswert. Das erfindungsgemäße Verfahren bietet somit enorme Vorteile, insbesondere in der Qualitätskontrolle bei der Fertigung von Brennstoffzellenstapeln, in der es eine schnelle Nachkontrolle der Kompression des Brennstoffzellenstapels ermöglicht. Dabei können mit der erfindungsgemäßen Methode sogar entlang einer Stapelachse variierende Kompressionen, beispielsweise durch unterschiedliche Straffung der Spannelemente, nachkontrolliert werden.

In einer bevorzugten Ausführungsform des erfindungsgemäßen Verfahrens erstreckt sich ein schwingfähiger Abschnitt des zumindest einen Spannelements von einer ersten Endplatte zu einer gegenüberliegenden zweiten Endplatte des Brennstoffzellenstapels. Das Spannelement weist dabei bevorzugt ein erstes Ende auf, das an einer ersten Endplatte des Brennstoffzellenstapels fixiert ist, und weist ferner ein zweites Ende auf, das an einer zweiten Endplatte des Brennstoffzellenstapels fixiert ist. Bevorzugt ist der Stapel mittels einer Mehrzahl solcher Spannelemente komprimiert.

Das Spannelement ist bevorzugt als band- oder streifenförmiges flexibles und/oder elastisches Spannelement ausgebildet. Das Spannelement weist somit eine Ausdehnung (Breite) in einer ersten Richtung quer zur Spannrichtung auf, die größer ist als eine Ausdehnung (Höhe) in einer zweiten Richtung quer zur ersten Richtung und quer zur Spannrichtung. Die Transversalschwingungen werden bevorzugt entlang der zweiten Richtung angeregt. Das Spannelement besteht bevorzugt aus einem elastischen Kunststoff, einem elastischen Polymer (beispielsweise Nylon) oder einem elastischen Metall und weist bei Standardbedingungen ein Elastizitätsmodul > 1 GPa und besonders bevorzugt > 5 GPa entlang der Spannrichtung auf.

Das Spannelement ist ferner bevorzugt stoffschlüssig und/oder mittels mindestens eines Spannmittels, insbesondere mittels mindestens einer Schraube, an zumindest einer Stapelendplatte fixiert. Um eine einfache Demontage des Brennstoffzellenstapels zu gewährleisten, ist das Spannelement bevorzugt an mindestens einer Endplatte des Stapels lösbar fixiert. Besonders bevorzugt ist das Spannelement an der Endplatte eingehängt. Hierfür weist die Endplatte bevorzugt zumindest einen Einhängehaken zum Einhängen des Spannelements an einer seiner Seitenflächen oder auf seiner in Stapelrichtung nach außen weisenden Oberfläche auf. Ebenfalls bevorzugt weist das Spannelement mindestens eine Einhängeöffnung zum Einhängen an einem Einhängehaken auf.

In einer ebenfalls bevorzugten Ausführungsform des erfindungsgemäßen Verfahrens erstreckt sich das zumindest eine Spannelement in einem Querschnitt in Stapelrichtung zumindest im Wesentlichen um einen Umfang des Brennstoffzellenstapels. Dabei ist ein Spannelement an mindestens einem seiner Endbereiche an einem anderen Endbereich desselben Spannelements oder an einem anderen Spannelement fixiert. Das Spannelement kann also ringförmig geschlossen ausgebildet sein. Das ringförmige ausgebildete Spannelement oder eine Gesamtheit ringförmig verbundener Spannelemente weist bevorzugt zwei schwingfähige Abschnitte auf, die sich jeweils entlang von gegenüberliegenden Seiten des Brennstoffzellenstapels erstrecken.

Besonders bevorzugt ist der Endbereich des zumindest einen Spannelements formschlüssig mit einem anderen Endbereich desselben Spannelements verbunden, beispielsweise durch eine Crimpverbindung. Ebenfalls bevorzugt ist ein Endbereich des zumindest einen Spannelements mittels einer Befestigungsvorrichtung an einem anderen Endbereich desselben oder eines anderen Spannelements fixiert. Die Befestigungsvorrichtung umfasst bevorzugt ein Befestigungsmittel, beispielsweise eine Befestigungsschraube und/oder eine Befestigungsleiste, in die das Befestigungsmittel eingreift. Ebenfalls bevorzugt umfasst die Befestigungsvorrichtung ferner zumindest ein Federelement, das einen Endbereich des zumindest einen Spannelements gegen einen anderen Endbereich desselben oder eines anderen Spannelements verspannt.

In einer besonders bevorzugten Ausführungsform des erfindungsgemäßen Verfahrens weist der Brennstoffzellenstapel eine Mehrzahl von in Stapelrichtung zwischen den Endplatten gespannten Spannelementen auf. Im erfindungsgemäßen Verfahren werden dann die oben genannten Schritte (a) bis (d) für jeden schwingfähigen Abschnitt jedes Spannelements des Brennstoffzellenstapels durchgeführt. Letztlich wird die auf den Brennstoffzellenstapel wirkende Kompressionszugkraft als Summe der für jeden schwingfähigen Abschnitt ermittelten Zugkraft kumulativ ermittelt. Ebenfalls bevorzugt kann die so ermittelte auf den Brennstoffzellenstapel wirkende Kompressionszugkraft mit einer Zielkompressionszugkraft für den Brennstoffzellenstapel verglichen werden.

Alternativ oder zusätzlich kann anhand der für jeden schwingfähigen Abschnitt ermittelten Zugkraft eine auf den Brennstoffzellenstapel wirkende Zugkraftverteilung ermittelt werden. Ebenfalls bevorzugt kann die so ermittelte Zugkraftverteilung mit einer Zielzugkraftverteilung verglichen werden. Bevorzugt handelt es sich bei der ermittelten und/oder der Zielzugkraftverteilung um eine konstante Zugkraftverteilung, wobei die spannfähigen Abschnitte entlang des Brennstoffzellenstapels in etwa gleiche Zugkräfte auf diesen ausüben. Alternativ handelt es sich bei der ermittelten und/oder der Zielzugkraftverteilung um eine Zugkraftverteilung, wobei die spannfähigen Abschnitte entlang des Brennstoffzellenstapels in etwa gleiche Zugkräfte auf diesen ausüben. Beispielsweise kann eine Zugkraft in einer Richtung quer zur Stapelrichtung ansteigen oder abfallen.

Ebenfalls Gegenstand der Erfindung ist ein Computerprogramm, welches einer Datenverarbeitungseinrichtung ermöglicht, nachdem es in Speichermittel der Datenverarbeitungseinrichtung geladen worden ist, ein Verfahren zum Bestimmen der auf einen Brennstoffzellenstapel wirkenden Kompressionszugkraft wie obenstehend beschrieben durchzuführen. Das Computerprogramm ist bevorzugt dazu eingerichtet, einen Nutzer zur Eingabe der Anzahl der schwingfähigen Abschnitte der einen Brennstoffzellenstapel komprimierenden Spannelemente und, für jeden schwingfähigen Abschnitt, zur Eingabe von dessen Länge und dessen linearer Massebelegung, aufzufordern. Das Computerprogramm ist ferner dazu eingerichtet ein Mikrofon zur Aufnahme eines akustischen Signals für jeden schwingfähigen Abschnitt anzusteuern und/oder für jeden schwingfähigen Abschnitt einen entsprechenden Datensatz zu laden.

Ebenfalls Gegenstand der Erfindung ist eine Datenverarbeitungseinrichtung mit einem Speichermedium, auf dem ein Programm gespeichert ist, welches der Datenverarbeitungseinrichtung ermöglicht, ein Verfahren zum Bestimmen der auf einen Brennstoffzellenstapel wirkenden Kompressionszugkraft wie vorstehend beschrieben durchzuführen. Die Datenverarbeitungsrichtung weist bevorzugt Eingabemittel und/oder eine Schnittstelle auf, über welche die Anzahl der schwingfähigen Abschnitte der einen Brennstoffzellenstapel komprimierenden Spannelemente und, für jeden schwingfähigen Abschnitt, dessen Länge und dessen lineare Massebelegung, in das Programm eingespeist werden können. Darüber hinaus weist die Datenverarbeitungseinrichtung bevorzugt einen Schallwandler, zum Beispiel ein Mikrofon, zum Aufnehmen des akustischen Signals für jeden schwingfähigen Abschnitt auf. Ferner weist die Datenverarbeitungseinrichtung ein Speicherelement zum Speichern der oben genannten eingegebenen oder eingespeisten Daten sowie zumindest einen Prozessor zum Berechnen der jeweils auf die schwingfähigen Abschnitte wirkenden Zugkräfte auf.

Besonders bevorzugt handelt es sich bei der Datenverarbeitungseinrichtung um ein Smartphone, auf dem eine Applikation gespeichert ist, welche es dem Smartphone ermöglicht, das erfindungsgemäße Verfahren durchzuführen. Ebenfalls bevorzugt handelt es sich bei der Datenverarbeitungseinrichtung um ein Steuergerät eines Brennstoffzellensystems, wobei das Brennstoffzellensystem ferner Mittel zum Anregen einer Schwingung in jedem schwingfähigen Abschnitt jedes Spannelements eines Brennstoffzellenstapels sowie Mittel zum Aufnehmen eines akustischen Signals von jedem schwingfähigen Abschnitt jedes Spannelements des Brennstoffzellenstapels aufweist. Das Steuergerät weist ferner einen Speicher auf, in dem die Werte für die Längen und die linearen Massebelegungen jedes der schwingfähigen Abschnitte abgelegt sind. Somit ist das Steuergerät in Kombination mit dem entsprechend ausgebildetem Brennstoffzellensystem dazu eingerichtet, das erfindungsgemäße Verfahren selbsttätig in regelmäßigen Abständen durchzuführen. Das Steuergerät ist ferner dazu ausgebildet, ein Steuersignal beziehungsweise ein Warnsignal auszugeben, wenn die ermittelte Kompressionszugkraft des Brennstoffzellenstapels einen vorbestimmten Grenzwert unterschreitet. Somit kann beispielsweise dem Nutzer eines Elektrofahrzeugs signalisiert werden, dass ein Problem mit der Dichtigkeit des Brennstoffzellenstapels vorliegt und/ oder eine Fachwerkstatt aufzusuchen ist.

Ebenfalls Gegenstand der Erfindung ist die Verwendung eines Smartphones zum Durchführen eines Verfahrens zum Bestimmen der auf einen Brennstoffzellenstapel wirkenden Kompressionszugkraft wie obenstehend beschrieben. Dabei können alle oder nur einige Schritte des erfindungsgemäßen Verfahrens auf dem Smartphone durchgeführt werden. Insbesondere ist es ausreichend, wenn mittels des Smartphones für jeden schwingfähigen Abschnitt das akustische Signal erfasst wird und bevorzugt auch die Grundfrequenz daraus ermittelt wird. Die Berechnung der auf den schwingfähigen Abschnitt wirkenden Zugkraft unter Einbeziehung von Länge und linearer Massebelegung muss nicht auf dem Smartphone erfolgen.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1     eine schematische Darstellung eines Brennstoffzellensystems gemäß dem Stand der Technik;

Figur 2     einen Brennstoffzellenstapel mit einer Mehrzahl den Stapel komprimierender Spannelemente;

Figur 3     die Abhängigkeit der Grundfrequenz eines Spannelements von dessen Länge;

Figur 4     die Abhängigkeit der Grundfrequenz eines Spannelements von der darauf wirkenden Zugkraft; und

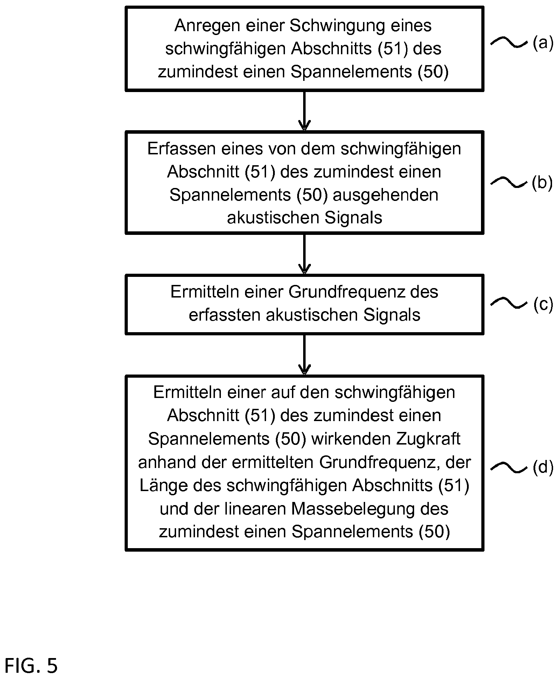

Figur 5     ein Ablaufdiagramm des erfindungsgemäßen Verfahrens.

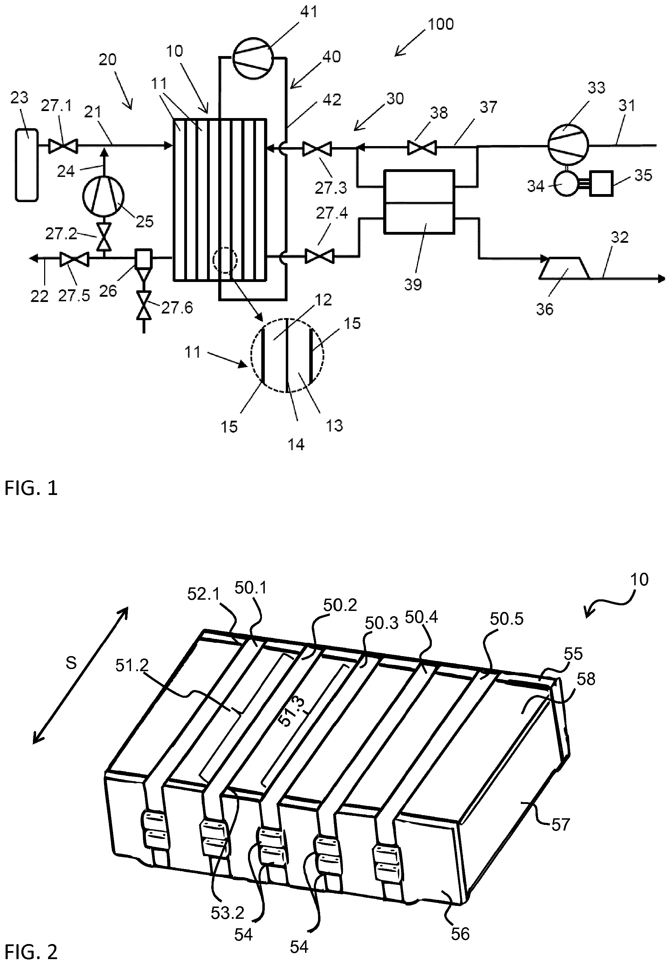

Figur 1 zeigt ein insgesamt mit 100 bezeichnetes Brennstoffzellensystem gemäß dem Stand der Technik. Das Brennstoffzellensystem 100 ist Teil eines nicht weiter dargestellten Fahrzeugs, insbesondere eines Elektrofahrzeugs, das einen Elektrotraktionsmotor aufweist, der durch das Brennstoffzellensystem 100 mit elektrischer Energie versorgt wird.

Das Brennstoffzellensystem 100 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14 mit einer hier nicht näher dargestellten ionenleitfähigen Polymerelektrolytmembran sowie beidseits daran angeordneten katalytischen Elektroden. Diese Elektroden katalysieren die jeweilige Teilreaktion der Brennstoffumsetzung. Die Anoden- und Kathodenelektrode sind als Beschichtung auf der Membran ausgebildet und weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt.

Wie in der Detaildarstellung der Figur 1 gezeigt, ist zwischen einer Bipolarplatte 15 und der Anode ein Anodenraum 12 ausgebildet und ist zwischen der Kathode und der nächsten Bipolarplatte 15 der Kathodenraum 13 ausgebildet. Die Bipolarplatten 15 dienen der Zuführung der Betriebsmittel in die Anoden- und Kathodenräume 12, 13 und stellen ferner die elektrische Verbindung zwischen den einzelnen Brennstoffzellen 11 her. Optional können Gasdiffusionslagen zwischen den Membran-Elektroden-Anordnungen 14 und den Bipolarplatten 15 angeordnet sein.

Um den Brennstoffzellenstapel 10 mit den Betriebsmitteln zu versorgen, weist das Brennstoffzellensystem 100 einerseits eine Anodenversorgung 20 und andererseits eine Kathodenversorgung 30 auf.

Die Anodenversorgung 20 des in Figur 1 gezeigten Brennstoffzellensystems 100 umfasst einen Anodenversorgungspfad 21, welcher der Zuführung eines Anodenbetriebsmittels (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Das Einstellen des Einspeisedrucks des Anodenbetriebsmediums in die Anodenräume 12 des Brennstoffzellenstapels 10 erfolgt über ein Dosierventil 27.1. Die Anodenversorgung 20 umfasst ferner einen Anodenabgaspfad 22, der das Anodenabgas aus den Anodenräumen 12 über einen Anodenauslass des Brennstoffzellenstapels 10 abführt.

Darüber hinaus weist die Anodenversorgung 20 des in Figur 1 gezeigten Brennstoffzellensystems 100 eine Rezirkulationsleitung 24 auf, welche den Anodenabgaspfad 22 mit dem Anodenversorgungspfad 21 verbindet. Die Rezirkulation von Brennstoff ist üblich, um den überstöchiometrisch eingesetzten Brennstoff dem Brennstoffzellenstapel 10 zurückzuführen. In der Rezirkulationsleitung 24 sind eine Rezirkulationsfördereinrichtung 25, vorzugsweise ein Rezirkulationsgebläse, sowie ein Klappenventil 27.2 angeordnet.

In der Anodenversorgung 22 des Brennstoffzellensystems ist ferner ein Wasserabscheider 26 verbaut, um das aus der Brennstoffzellenreaktion entstehende Produktwasser abzuleiten. Ein Ablass des Wasserabscheiders kann mit der Kathodenabgasleitung 32, einem Wassertank oder einer Abgasanlage verbunden sein.

Die Kathodenversorgung 30 des in Figur 1 gezeigten Brennstoffzellensystems 100 umfasst einen Kathodenversorgungspfad 31, welcher den Kathodenräumen 13 des Brennstoffzellenstapels 10 ein sauerstoffhaltiges Kathodenbetriebsmittel zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt.

Zur Förderung und Verdichtung des Kathodenbetriebsmittels ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter 33 ausgestaltet, dessen Antrieb über einen mit einer entsprechenden Leistungselektronik 35 ausgestatteten Elektromotor 34 erfolgt.

Das in Figur 1 gezeigte Brennstoffzellensystem 100 weist ferner ein stromaufwärts des Verdichters 33 in der Kathodenversorgungsleitung 31 angeordnetes Befeuchtermodul 39 auf. Das Befeuchtermodul 39 ist einerseits so in dem Kathodenversorgungspfad 31 angeordnet, dass es von dem Kathodenbetriebsgas durchströmbar ist. Andererseits ist es so in dem Kathodenabgaspfad 32 angeordnet, dass es von dem Kathodenabgas durchströmbar ist. Ein Befeuchter 39 weist typischerweise eine Mehrzahl von wasserdampfpermeablen Membranen auf, die entweder flächig oder in Form von Hohlfasern ausgebildet sind. Dabei wird eine Seite der Membranen von dem vergleichsweise trockenen Kathodenbetriebsgas (Luft) überströmt und die andere Seite von dem vergleichsweise feuchten Kathodenabgas (Abgas). Getrieben durch den höheren Partialdruck an Wasserdampf in dem Kathodenabgas kommt es zu einem Übertritt von Wasserdampf über die Membranen in das Kathodenbetriebsgas, das auf diese Weise befeuchtet wird.

Das Brennstoffzellensystem 100 weist ferner einen die Kathodenversorgungsleitung stromaufwärts und stromabwärts des Befeuchters 39 miteinander verbindenden Befeuchterbypass 37 mit einem darin angeordneten Klappenventil als Bypassstellmittel 38 auf. Ferner sind Klappenventile 27.3 und 27.4 stromaufwärts des Brennstoffzellenstapels 10 in der Anodenversorgungsleitung 21 beziehungsweise stromabwärts des Brennstoffzellenstapels 10 in der Anodenabgasleitung 22 angeordnet.

Verschiedene weitere Einzelheiten der Anoden- und Kathodenversorgung 20, 30 sind in Figur 1 aus Gründen der Übersichtlichkeit nicht gezeigt. Beispielsweise kann die Anodenabgasleitung 22 in die Kathodenabgasleitung 32 münden, sodass das Anodenabgas und das Kathodenabgas über eine gemeinsame Abgasanlage abgeführt werden.

Die Figur 2 zeigt eine Detaildarstellung des in Figur 1 dargestellten Brennstoffzellenstapels 10. Der Brennstoffzellenstapel weist eine Mehrzahl von in Stapelrichtung S flächig aufeinander gestapelter Brennstoffzellen auf. In Stapelrichtung ist der Brennstoffzellenstapel 10 von einer ersten Endplatte 55 und einer gegenüberliegenden zweiten Endplatte 56 begrenzt. In einer ersten Richtung quer zur Stapelrichtung S ist der Brennstoffzellenstapel 10 durch Seitenverkleidungen 57 begrenzt. In einer zweiten Richtung quer zur ersten Richtung und quer zur Stapelrichtung S ist der Brennstoffzellenstapel 10 durch Seitenverkleidungen 58 begrenzt. Der Brennstoffzellenstapel 10 kann ferner eine Mehrzahl von Montagelementen zum Befestigen des Brennstoffzellenstapels 10 an einer tragenden Struktur, beispielsweise einer Autokarosserie, aufweisen.

Der in Figur 2 gezeigte Brennstoffzellenstapel 10 ist über einer Mehrzahl von insgesamt zehn Spannelementen 50 komprimiert. Jedes Spannelement 50 ist dabei über ein Spannmittel (nicht dargestellt) an der ersten Endplatte 55 und über ein weiteres Spannmittel 54 an der zweiten Endplatte fixiert und verläuft parallel zu einer Seitenverkleidung 58 des Brennstoffzellenstapels 10. Dabei weisen die Spannelemente 50 jeweils einen Abstand zu der Seitenverkleidung 58 auf.

In Figur 2 sind im Detail fünf Spannelemente 50.1, 50.2, 50.3, 50.4 und 50.5 gezeigt, die parallel zu einer oberen Seitenverkleidung 58 verlaufen. Der Brennstoffzellenstapel weist darüber hinaus fünf weitere Spannelemente 50.6, 50.7, 50.8, 50.9 und 50.0 (nicht dargestellt) auf, die parallel zu einer unteren Seitenverkleidung verlaufen und von denen in Figur 2 lediglich die an der zweiten Endplatte 56 fixierten Spannmittel 54 dargestellt sind. Die Spannelemente 50 bestehen aus Nylon und weisen eine lineare Massebelegung $\mu$ von 0,152 kg/m auf.

Die Spannmittel 54 sind jeweils auf in Stapelrichtung S nach außenweisenden Oberflächen der ersten Endplatte 55 und der zweiten Endplatte 56 angeordnet. Die an den Spannmitteln 54 fixierten Spannelemente 50 verlaufen somit zunächst entlang dieser Oberflächen, an denen sie anliegen, über eine Kante der Endplatten 55, 56 und eine schmale Seitenflächen der Endplatten 55, 56. Die Endplatten 55, 56 stehen in der zweiten Richtung etwa 2 mm über die Seitenverkleidungen 58 über.

Dadurch weist jedes Spannelement 50 ein erstes festes Ende 52 an einer innenliegenden Kante der ersten Endplatte 55 und ein zweites festes Ende 53 an einer innenliegenden Kante der zweiten Endplatte 56 auf. In Figur 2 sind beispielhaft das erste feste Ende 52.1 eines ersten Spannelements 50.1 und das zweite feste Ende 53.2 eines zweiten Spannelements 50.2 dargestellt. Jedes Spannelement 50 weist zwischen seinem ersten festen Ende 52 und seinem zweiten festen Ende 53 einen schwingfähigen Abschnitt 51 auf. In Figur 2 sind beispielhaft der schwingfähige Abschnitt 51.2 eines zweiten Spannelements 50.2 und der schwingfähige Abschnitt 51.3 eines dritten Spannelements 50.3 dargestellt. Jeder dieser schwingfähigen Abschnitte 51 hat eine Länge von 383 mm.

Zum Durchführen des erfindungsgemäßen Verfahrens wird nacheinander jeder schwingfähige Abschnitt 51 jedes Spannelements 50 in der zweiten Richtung manuell ausgelenkt und somit zu einer transversalen Schwingung angeregt. Da die Endplatten 55, 56 in der zweiten Richtung etwa 2 mm über die Seitenverkleidungen 58 überstehen, liegen die schwingfähigen Abschnitte 51 der gespannten Spannelemente 50 nicht an den Seitenverkleidungen 58 an und können zwischen den festen Enden 52, 53 mit Amplituden bis zu 2 mm frei schwingen.

Für jeden schwingenden schwingfähigen Abschnitt 51 wird zunächst ein akustisches Signal aufgenommen, beispielsweise mittels des Mikrofons eines Smartphones. In einem nächsten Schritt wird mittels eines geeigneten Programms ein Frequenzspektrum für jedes der aufgenommenen akustischen Signale und daraus, oder direkt für jedes aufgenommene akustische Signal, eine Grundfrequenz des aufgenommenen akustischen Signals bestimmt. Programme zum Bestimmen des Frequenzspektrums und/oder der Grundfrequenz sind auf dem Markt frei verfügbar.

Die folgende Tabelle zeigt für jeden schwingfähigen Abschnitt jedes der zehn Spannelemente 50 die im erfindungsgemäßen Verfahren ermittelten Grundfrequenzen $f_1$ und darüber hinaus die auf den jeweiligen schwingfähigen Abschnitt 51 wirkende Zugkraft $F_{zug}$, welche aus der Frequenz $f_1$ des jeweiligen schwingfähigen Abschnitts 51 gemäß der in der Beschreibung genannten Formel bestimmt wurde:

| | 50.1 | 50.2 | 50.3 | 50.4 | 50.5 | 50.6 | 50.7 | 50.8 | 50.9 | 50.0 |
|---|---|---|---|---|---|---|---|---|---|---|
| $f_1$ [Hz] | 188 | 167 | 173 | 179 | 173 | 173 | 170 | 170 | 179 | 182 |
| $F_{zug}$ [kN] | 3,1 | 2,5 | 2,7 | 2,9 | 2,7 | 2,7 | 2,6 | 2,6 | 2,9 | 2,9 |

Unter der Annahme, dass sich der Brennstoffzellenstapel 10 insgesamt im Kräftegleichgewicht befindet, entspricht die Summe der für alle schwingfähigen Abschnitte 51 ermittelten Zugkräfte der insgesamt auf den Brennstoffzellenstapel 10 wirkenden Kompressionszugkraft von 27,6 kN.

Der Brennstoffzellenstapel 10 wurde ursprünglich mit einer definierten Druckkraft von 28,5 kN komprimiert und mittels der Spannelemente 50 in der komprimierten Form fixiert. Das erfindungsgemäße Verfahren erbringt somit sowohl Resultate in der richtigen Größenordnung und zeigt zudem eine nachlassende Kompression des Brennstoffzellenstapels 10 an.

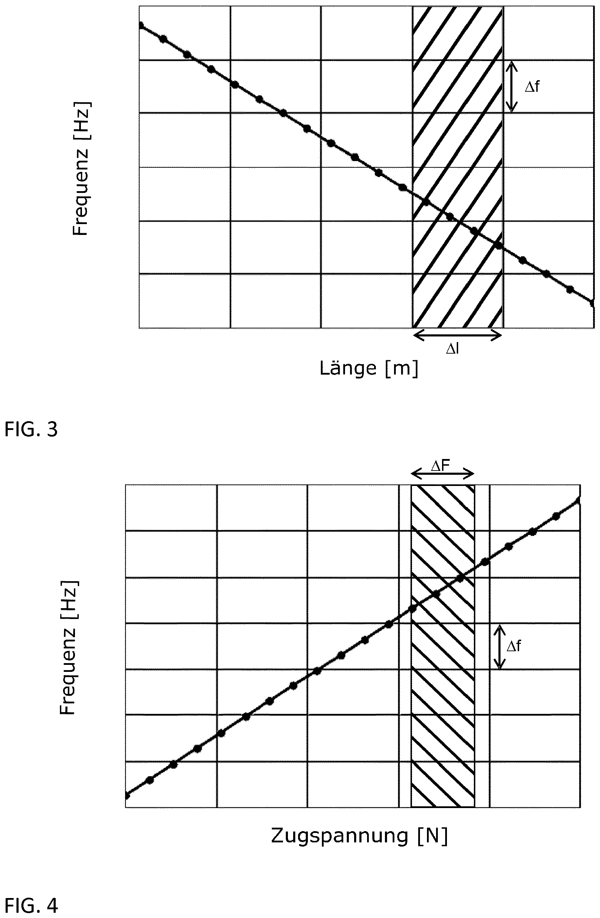

Die in Figur 3 gezeigte Längenabweichung Δl von etwa 1 mm entspricht einer Änderung der Grundfrequenz Δf von etwa 0,5 Hz. Somit ist das erfindungsgemäße Verfahren relativ invariant gegenüber kleineren Messfehlern der Längen der schwingfähigen Abschnitte 51. Die in Figur 4 gezeigte Änderung der auf einen schwingfähigen Abschnitt 51 wirkenden Zugkraft ΔF von nur 15 N entspricht einer Änderung von dessen Grundfrequenz Δf um ebenfalls 0,5 Hz. Somit ist das erfindungsgemäße Verfahren hinsichtlich der Kräftemessung ausreichend genau.

**Patentansprüche**

1. Verfahren zum Bestimmen der auf einen Brennstoffzellenstapel (10) aufgrund zumindest eines Spannelements (50) wirkenden Kompressionszugraft, wobei der Brennstoffzellenstapel (10) eine Vielzahl von in Stapelrichtung (S) zwischen zwei Endplatten (55, 56) angeordneten Brennstoffzellen (11) und zumindest ein in Stapelrichtung (S) zwischen den Endplatten (55, 56) gespanntes Spannelement (50) aufweist,
   das Verfahren aufweisend die Schritte:

      (a) Anregen einer Schwingung eines schwingfähigen Abschnitts (51) des zumindest einen Spannelements (50);
      (b) Erfassen eines von dem schwingfähigen Abschnitt (51) des zumindest einen Spannelements (50) ausgehenden akustischen Signals;
      (c) Ermitteln einer Grundfrequenz des erfassten akustischen Signals;
      (d) Ermitteln einer auf den schwingfähigen Abschnitt (51) des zumindest einen Spannelements (50) wirkenden Zugkraft anhand der ermittelten Grundfrequenz, der Länge des schwingfähigen Abschnitts (51) und der linearen Massebelegung des zumindest einen Spannelements (50).

2. Verfahren nach Anspruch 1, wobei sich ein schwingfähiger Abschnitt (51) des zumindest einen Spannelements (50) von einer ersten Endplatte (55) zu einer gegenüberliegenden zweiten Endplatte (56) des Brennstoffzellenstapels (10) erstreckt.

**3.** Verfahren nach Anspruch 1 oder 2, wobei sich das zumindest eine Spannelement (50) in einem Querschnitt in Stapelrichtung (S) im Wesentlichen um einen Umfang des Brennstoffzellenstapels (10) erstreckt und zwei schwingfähige Abschnitte (51) entlang von gegenüberliegenden Seiten des Brennstoffzellenstapels (10) aufweist.

**4.** Verfahren nach einem der vorangehenden Ansprüche, wobei der Brennstoffzellenstapel (10) eine Mehrzahl von in Stapelrichtung (S) zwischen den Endplatten (55, 56) gespannten Spannelementen (50) aufweist, das Verfahren ferner aufweisend die Schritte:

(e) Durchführen der Schritte (a) bis (d) für jeden schwingfähigen Abschnitt (51) jedes Spannelements (50) des Brennstoffzellenstapels (10), und
(f) Ermitteln der auf den Brennstoffzellenstapel (10) wirkenden Kompressionszugraft als Summe der für jeden schwingfähigen Abschnitt (51) ermittelten Zugkraft, und/oder
(g) Ermitteln der auf den Brennstoffzellenstapel (10) wirkenden Kompressionszugkraftverteilung anhand der für jeden schwingfähigen Abschnitt (51) ermittelten Zugkraft.

**5.** Verfahren nach einem der vorangehenden Ansprüche, wobei Schritt (b) mit einem Schallwandler durchgeführt wird.

**6.** Verfahren nach einem der vorangehenden Ansprüche, wobei die lineare Massebelegung des zumindest einen Spannelements (50) anhand der Dichte des zumindest einen Spannelements (50) und des Querschnitts des zumindest einen Spannelements (50) bestimmt wird.

**7.** Computerprogramm, welches einer Datenverarbeitungseinrichtung ermöglicht, nachdem es in Speichermittel der Datenverarbeitungseinrichtung geladen worden ist, ein Verfahren zum Bestimmen der auf einen Brennstoffzellenstapel wirkenden Kompressionszugkraft gemäß einem der Ansprüche 1 bis 6 durchzuführen.

**8.** Datenverarbeitungseinrichtung mit einem Speichermedium, auf dem ein Programm gespeichert ist, welches der Datenverarbeitungseinrichtung ermöglicht, ein Verfahren zum Bestimmen der auf einen Brennstoffzellenstapel wirkenden Kompressionszugkraft gemäß einem der Ansprüche 1 bis 6 durchzuführen.

**9.** Datenverarbeitungseinrichtung gemäß Anspruch 8, wobei die Datenverarbeitungseinrichtung ein Smartphone ist.

**10.** Verwendung eines Smartphones zum Durchführen eines Verfahrens nach einem der Ansprüche 1 bis 6.

**Claims**

**1.** Method for determining the compressive tensile force acting on a fuel cell stack (10) as a result of at least one clamping element (50), wherein the fuel cell stack (10) has a plurality of fuel cells (11) arranged in the stacking direction (S) between two end plates (55, 56) and at least one clamping element (50) tensioned in the stacking direction (S) between the end plates (55, 56), the method having the steps:

a) exciting an oscillation of an oscillatory section (51) of the at least one clamping element (50);
b) detecting an acoustic signal emanating from the oscillatory section (51) of the at least one clamping element (50);
c) determining a fundamental frequency of the detected acoustic signal;
d) determining a tensile force acting on the oscillatory section (51) of the at least one clamping element (50) based on the determined fundamental frequency, the length of the oscillatory section (51) and the linear mass allocation of the at least one clamping element (50).

**2.** Method according to claim 1, wherein an oscillatory section (51) of the at least one clamping element (50) extends from a first end plate (55) to an opposite second end plate (56) of the fuel cell stack (10).

**3.** Method according to claim 1 or 2, wherein the at least one clamping element (50) extends in a cross section in the stacking direction (S) essentially around a circumference of the fuel cell stack (10) and has two oscillatory sections (51) along opposite sides of the fuel cell stack (10).

4. Method according to any one of the preceding claims, wherein the fuel cell stack (10) has a plurality of clamping elements (50) tensioned in the stacking direction (S) between the end plates (55, 56), the method further having the steps:

> e) carrying out steps (a) to (d) for each oscillatory section (51) of each clamping element (50) of the fuel cell stack (10), and
> f) determining the compressive tensile force acting on the fuel cell stack (10) as the sum of the tensile force determined for each oscillatory section (51), and/or
> g) determining the compressive tensile force distribution acting on the fuel cell stack (10) on the basis of the tensile force determined for each oscillatory section (51).

5. Method according to any one of the preceding claims, wherein step (b) is carried out with a sound transducer.

6. Method according to any one of the preceding claims, wherein the linear mass allocation of the at least one clamping element (50) is determined on the basis of the density of the at least one clamping element (50) and the cross section of the at least one clamping element (50).

7. Computer program, which enables a data processing apparatus, after the program has been loaded into storage means of the data processing apparatus, to carry out a method for determining the compressive tensile force acting on a fuel cell stack according to any one of claims 1 to 6.

8. Data processing apparatus with a storage medium on which a program is stored which enables the data processing apparatus to carry out a method for determining the compressive tensile force acting on a fuel cell stack according to any one of claims 1 to 6.

9. Data processing apparatus according to claim 8, wherein the data processing apparatus is a smartphone.

10. Use of a smartphone for carrying out a method according to any one of claims 1 to 6.

**Revendications**

1. Procédé destiné à déterminer la force de traction-compression agissant sur un empilement de piles à combustible (10) à l'aide d'au moins un élément de tension (50), dans lequel l'empilement de piles à combustible (10) présente une pluralité de piles à combustible (11) disposées dans la direction d'empilement (S) entre deux plaques d'extrémité (55, 56) et au moins un élément de tension (50) tendu dans la direction d'empilement (S) entre les plaques d'extrémité (55, 56),
le procédé comprenant les étapes consistant à :

> (a) stimuler une oscillation d'une section oscillante (51) de l'au moins un élément de tension (50) ;
> (b) détecter un signal acoustique émanant de la section oscillante (51) de l'au moins un élément de tension (50) ;
> (c) déterminer une fréquence de base du signal acoustique détecté ;
> (d) déterminer une force de traction agissant sur la section oscillante (51) de l'au moins un élément de tension (50) à l'aide de la fréquence de base déterminée, de la longueur de la section oscillante (51) et de la masse surfacique linéaire de l'au moins un élément de tension (50).

2. Procédé selon la revendication 1, dans lequel une partie oscillante (51) de l'au moins un élément de tension (50) s'étend d'une première plaque d'extrémité (55) à une seconde plaque d'extrémité opposée (56) de l'empilement de piles à combustible (10).

3. Procédé selon la revendication 1 ou 2, dans lequel l'au moins un élément de tension (50) s'étend dans une section transversale dans la direction d'empilement (S) sensiblement autour d'une circonférence de l'empilement de piles à combustible (10) et présente deux sections oscillantes (51) le long de côtés opposés de l'empilement de piles à combustible (10).

4. Procédé selon l'une quelconque des revendications précédentes, dans lequel l'empilement de piles à combustible (10) présente une pluralité d'éléments de tension (50) serrés dans la direction d'empilement (S) entre les plaques d'extrémité (55, 56), le procédé comprenant en outre les étapes consistant à :

e) effectuer les étapes a) à d) pour chaque section oscillante (51) de chaque élément de tension (50) de l'empilement de piles à combustible (10), et

f) déterminer la force de traction-compression agissant sur l'empilement de piles à combustible (10) comme la somme de la force de traction déterminée pour chaque section oscillante (51) ; et/ou

g) déterminer la répartition de force de traction-compression agissant sur l'empilement de piles à combustible (10) à l'aide de la force de traction déterminée pour chaque section oscillante (51).

5. Procédé selon l'une quelconque des revendications précédentes, dans lequel l'étape (b) est effectuée avec un transducteur acoustique.

6. Procédé selon l'une quelconque des revendications précédentes, dans lequel la masse surfacique linéaire de l'au moins un élément de tension (50) est déterminée sur la base de la densité de l'au moins un élément de tension (50) et de la section transversale de l'au moins un élément de tension (50).

7. Programme informatique qui permet à un dispositif de traitement de données, après avoir été rempli des moyens de stockage du dispositif de traitement de données, d'exécuter un procédé destiné à déterminer la force de traction-compression agissant sur un empilement de piles à combustible selon l'une quelconque des revendications 1 à 6.

8. Dispositif de traitement de données avec un support de stockage sur lequel un programme est enregistré, qui permet au dispositif de traitement de données d'exécuter un procédé destiné à déterminer la force de traction-compression agissant sur un empilement de piles à combustible selon l'une quelconque des revendications 1 à 6.

9. Dispositif de traitement de données selon la revendication 8, dans lequel ledit dispositif de traitement de données est un smartphone.

10. Utilisation d'un smartphone pour exécuter un procédé selon l'une quelconque des revendications 1 à 6.

FIG. 1

FIG. 2

FIG. 3

FIG. 4

Anregen einer Schwingung eines schwingfähigen Abschnitts (51) des zumindest einen Spannelements (50) ∿ (a)

Erfassen eines von dem schwingfähigen Abschnitt (51) des zumindest einen Spannelements (50) ausgehenden akustischen Signals ∿ (b)

Ermitteln einer Grundfrequenz des erfassten akustischen Signals ∿ (c)

Ermitteln einer auf den schwingfähigen Abschnitt (51) des zumindest einen Spannelements (50) wirkenden Zugkraft anhand der ermittelten Grundfrequenz, der Länge des schwingfähigen Abschnitts (51) und der linearen Massebelegung des zumindest einen Spannelements (50) ∿ (d)

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1870952 A2
- US 20140255817 A1
- JP 2010157364 A
- DE 10392581 B4